# EUROPEAN PATENT APPLICATION

(11) **EP 4 618 198 A1**
(43) Date of publication of application: **17.09.2025**
(21) Application number: 23907695.3
(22) Date of filing: 19.12.2023
(51) Int. Cl.: H01M 4/66, C25D 1/04, B21B 1/40, C22C 9/00, C22F 1/08, H01M 4/13, H01M 10/052, H01M 4/02

(54) **COPPER CURRENT COLLECTOR, METHOD FOR MANUFACTURING SAME, ANODE AND LITHIUM SECONDARY BATTERY COMPRISING SAME**

(30) Priority: 19.12.2022 KR 20220178735
(71) Applicant: LG Energy Solution, Ltd., Seoul 07335 (KR)
(72) Inventor: KWON, Jung Geun, Daejeon 34122 (KR); NA, Seon Hyeong, Daejeon 34122 (KR)
(74) Representative: Hoffmann Eitle
(86) International application number: PCT/KR2023/021020
(87) International publication number: WO 2024/136412

(57) **Abstract**

The present invention relates to a copper current collector having an area in which compressive residual stress is formed of 30% or more of a total measured area when measuring surface residual stress, and a manufacturing method thereof.

## Description

### TECHNICAL FIELD

This application claims the benefit of Korean Patent Application No. 10-2022-0178735, filed on December 19, 2022, in the Korean Intellectual Property Office, the disclosure of which is incorporated herein in its entirety by reference.

The present invention relates to a copper current collector and a manufacturing method thereof.

### BACKGROUND ART

As the technology development and demand for electric vehicles and energy storage systems (ESS) have increased, the demand for secondary batteries as an energy source has been rapidly increased, and accordingly, studies have been conducted on batteries which may meet various needs. Particularly, studies have been actively conducted on a lithium secondary battery as a power source for such devices, which has high energy density and excellent lifespan and cycle properties.

In general, a lithium secondary battery includes a positive electrode, a negative electrode, a separator interposed between the positive electrode and the negative electrode, an electrolyte, and the like. The negative electrode may have a structure in which a negative electrode active material layer is stacked on one or both surfaces of a negative electrode current collector, and a copper thin film is mainly used as the negative electrode current collector.

The types of a copper thin film include roll-pressed copper foil, which is manufactured through a roll-pressing process, and electrolytic copper foil, which is manufactured through an electrolytic plating process. The roll-pressed copper foil has the advantage over the electrolytic copper foil in terms of physical properties due to the processability imparted to the metal through the roll-pressing process, but has the disadvantage of high manufacturing costs as a result of performing a plurality of times of roll-pressing to manufacture the thin film, and poor-quality uniformity with respect to the width. On the other hand, the electrolytic copper foil has the advantage of being easily manufactured to be very thin at a thickness of 6 to 8um. However, since the electrolytic copper foil is manufactured in an electroplating manner due to the nature of the process, tensile residual stress may be formed on the surface of the copper thin film. The tensile residual stress acts as a factor which increases the stress intensity factor of a metal. Therefore, when a copper current collector manufactured using the electrolytic copper foil is exposed to an electrolyte solution environment inside a battery for a long period of time, there is a problem in that cracks are generated and propagated on the surface of the current collector caused by corrosion, which degrade mechanical properties of the copper current collector and lifespan performance of the battery.

Therefore, there is a need to develop technology to reduce fatigue corrosion on the surface of a copper current collector in an electrolyte solution environment inside a battery.

### DISCLOSURE OF THE INVENTION

### TECHNICAL PROBLEM

The present invention is to solve the above-described problem, and provides a copper current collector capable of reducing fatigue corrosion in an electrolyte solution environment inside a battery, and a manufacturing method of the copper current collector.

### TECHNICAL SOLUTION

According to an embodiment of the present invention, there is provided a copper current collector having an area in which compressive residual stress is formed of 30% or more of a total measured area when measuring surface residual stress.

In the copper current collector of the present invention, the area in which the compressive residual stress is formed may be 30% to 100% of the total measured area.

A maximum compressive residual stress may be -20 MPa or less, specifically -200 MPa to -20 MPa.

A thickness of the copper current collector of the present invention may be from 4 µm to 20 µm.

According to another embodiment of the present invention, there is provided a method for manufacturing a copper current collector, the method including manufacturing a copper thin film by an electrolytic plating process, and roll-pressing the copper thin film to form a copper current collector, wherein the copper current collector has an area in which a compressive residual stress is formed of 30% or more of a total measured area when measuring residual stress.

According to the method for manufacturing a copper current collector of the present invention, at least a portion of the surface of the copper current collector may be plastically deformed by the roll-pressing.

A magnitude of the pressure applied to the copper thin film during the roll-pressing may be 60% to 83%, specifically 210 MPa to 290 MPa, of a tensile strength of the copper thin film before the roll-pressing.

A tensile strength of the copper thin film before the roll-pressing may be 350 MPa to 500 MPa.

According to another aspect of the present invention, there is provided a negative electrode including the aforementioned copper current collector.

According to another aspect of the present invention, there is provided a lithium secondary battery including a negative electrode which includes the aforementioned copper current collector, a positive electrode, and a separator disposed between the negative electrode and the positive electrode.

### ADVANTAGEOUS EFFECTS

According to the present invention, the area in which compressive residual stress is formed is 30% or more of the total measured area when measuring the surface residual stress of a copper current collector, so that it is possible to significantly lower a stress intensity factor of the copper current collector. As a result, by lowering the intensity of a stress field formed around fine cracks on the surface of the copper current collector in an electrolyte solution environment inside a battery, it is possible to prevent crack propagation caused by fatigue corrosion, which may improve lifespan properties of the battery.

In addition, the copper current collector according to the present invention may be manufactured by roll-pressing a copper thin film manufactured by an electrolytic plating process. In this case, due to the nature of the electrolytic plating process, the copper current collector may be manufactured to be thin, which may improve the energy density of a battery.

### BRIEF DESCRIPTION OF THE DRAWINGS

The drawings attached herein illustrate preferred embodiments of the present invention by example, and serve to enable technical concepts of the present invention to be further understood together with detailed description of the invention given below, and therefore the present invention should not be interpreted only with matters in such drawings.
FIG. 1 is an image of the surface residual stress distribution of a copper current collector of Example 1 measured by X-ray diffraction.
FIG. 2 is an image of the surface residual stress distribution of a copper current collector of Example 2 measured by X-ray diffraction.
FIG. 3 is an image of the surface residual stress distribution of a copper current collector of Comparative Example 1 measured by X-ray diffraction.

### BEST MDOE FOR CARRYING OUT THE INVENTION

Advantages and features of the present invention, and implementation methods thereof will be clarified through following embodiments described with reference to the accompanying drawings. The present invention may, however, be embodied in different forms and should not be construed as limited to the embodiments set forth herein. Rather, these embodiments are provided so that this disclosure will be thorough and complete, and will fully convey the scope of the present invention to those skilled in the art. Further, the present invention is only defined by scopes of claims. Like reference numerals refer to like elements throughout the specification.

Unless otherwise defined, all the terms used herein (including technical and scientific terms) will be used in a sense that can be commonly understood to those of ordinary skill in the art to which the inventive concept pertains. In addition, the terms that are defined in a commonly used dictionary are not interpreted ideally or excessively unless specifically defined.

The terms used herein are for the purpose of describing embodiments and are not intended to be limiting of the present invention. In the present specification, singular forms include plural forms unless the context clearly indicates otherwise. As used herein, the terms "comprises" and/or "comprising" are intended to be inclusive of the stated elements, and do not exclude the possibility of the presence or the addition of one or more other elements.

In the present specification, when a part is said to include a certain component, it means that the part may further include another component rather than excluding another component unless otherwise stated.

In the present specification, the description of "A and/or B" means A, or B, or A and B.

In the present specification, "%" means wt% unless otherwise noted.

In the present specification, D₅₀ means a particle diameter corresponding to 50% of the volume accumulation in a particle diameter distribution curve of particles. The D₅₀ may be measured by, for example, a laser diffraction method. The laser diffraction method generally enables measurement of a particle diameter from a sub-micron region to several millimeters, so that results of high reproducibility and high resolution may be obtained.

In the present specification, the "specific surface area" is measured by a BET method, and specifically, may be calculated from the adsorption amount of nitrogen gas under a liquid nitrogen temperature (77K) using Belsorp-mini II of BEL Japan Co., or Micromertics ASAP 2020 of Microtrac Co.

In the present specification, the term "average diameter" means an average value of the longest diameter and the shortest diameter of a ligament or pore included in a copper current collector. For example, the average diameter may be calculated by obtaining an SEM image of a cross-section of a copper current collector by using Ultra 55 of Zeiss Co., and then measuring the diameter of a ligament or pore included in the SEM image.

In the present specification, a method for measuring the surface residual stress of a copper current collector may be measured by X-ray diffraction using the µ-X360 equipment of PULSTEC Co.

In the present specification, the tensile strength of a copper thin film means the stress when the copper thin film breaks before the copper thin film is roll-pressed. Specifically, the tensile strength of a copper thin film means the maximum value of the tensile strength measured when the copper thin film breaks after cutting the copper thin film to a width of 12.7 mm, and then fastening both ends of the copper thin film respectively to upper and lower jigs of a measuring device (UTM, Zwick Co.), followed by pulling the ends in a vertical direction at a rate of 50 mm/min.

### <Copper current collector>

A copper current collector of the present invention has the area, in which compressive residual stress is formed, of 30% or more of the total measured area when measuring surface residual stress.

Specifically, the area in which the compressive residual stress is formed may be 30% to 100% of the total measured area, and more specifically 50% to 100%. When the ratio of the area in which the compressive residual stress is formed is less than 30%, the area ratio of a tensile residual stress formation region having a high stress intensity factor in the copper current collector is relatively increased, and as a result, when the copper current collector is exposed to an electrolyte solution environment inside a battery for a long period of time, cracks are generated and propagated on the surface of the current collector caused by corrosion, which may degrade mechanical properties of the copper current collector and lifespan performance of the battery.

In the copper current collector of the present invention, the maximum compressive residual stress may be -20 MPa or less, specifically -200 MPa to -20 MPa, and more specifically -200 MPa to -50 MPa. If the maximum compressive residual stress of the copper current collector satisfies the above-described numerical ranges, by lowering the intensity of a stress field formed around fine cracks on the surface of the current collector, it is possible to prevent crack propagation caused by fatigue corrosion on the surface of the current collector when a battery to which the copper current collector is applied is driven.

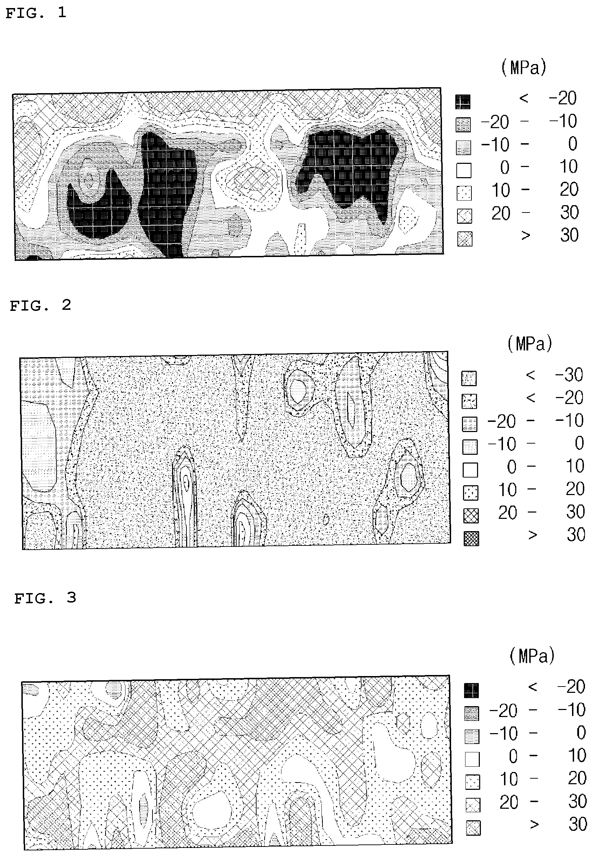

According to the present invention, on the surface of the copper current collector, there may be a mixture of a portion in which compressive residual stress is formed and a portion in which tensile residual stress is formed. For example, FIG. 1 is an image of the surface residual stress distribution of a copper current collector of Example 1 measured by X-ray diffraction. As illustrated in FIG. 1, the current collector may include a portion in which compressive residual stress is formed (a region of less than 0 MPa) and a portion in which tensile residual stress is formed (a region of 0 MPa or more). In this case, the portion in which compressive residual stress is formed and the portion in which tensile residual stress is formed may each be separated and formed into one or more regions to be scattered on the surface of the current collector.

The copper current collector according to the present invention may have conductivity without causing a chemical change in the battery, and thus, may be used as a negative electrode current collector. In addition, the copper current collector according to the present invention may be manufactured by electrolytic plating, in which case, the copper current collector has the advantage of being able to reduce manufacturing costs relatively.

The copper current collector may have a thickness of 4 µm to 20 µm, specifically 5 µm to 15 µm, and more specifically 5 µm to 10 µm. If the thickness of the copper current collector satisfies the above-described numerical ranges, the energy density of a battery manufactured using the copper current collector of the present invention may improve.

### <Method for manufacturing copper current collector>

Next, a method for manufacturing a copper current collector according to the present invention will be described.

The method for manufacturing a copper current collector according to the present invention includes manufacturing a copper thin film by an electrolytic plating process, and roll-pressing the copper thin film to form a copper current collector, wherein the copper current collector has the area in which compressive residual stress is formed of 30% or more of the total measured area when measuring residual stress.

A copper current collector manufactured by a typical electrolytic plating method has tensile residual stress formed on the surface of the current collector due to the nature of the process, and the tensile residual stress increases the stress intensity factor of a metal. As a result, when the copper current collector is exposed to an electrolyte solution environment for a long period of time, there is a problem in that cracks generated and propagated on the surface of the current collector caused by corrosion, which degrade mechanical properties of the copper current collector and the lifespan performance of a battery.

On the other hand, a copper current collector of the present invention may be manufactured by roll-pressing a copper thin film manufactured by an electrolytic plating process. Compression residual stress may be formed on the surface of the copper current collector by the roll-pressing, and accordingly, the copper current collector may have a reduced stress intensity factor. As a result, by lowering the intensity of a stress field around fine cracks on a surface portion of the current collector in an electrolyte solution environment, it is possible to prevent crack propagation caused by fatigue corrosion, which may improve lifespan properties of a battery.

Hereinafter, each step of the method for manufacturing a copper current collector according to the present invention will be described in more detail.

### (1) Manufacturing copper thin film by electrolytic plating process

The method for manufacturing a copper current collector according to the present invention is initiated by the step of preparing a thin copper film (Cu foil) by an electrolytic plating process.

Specifically, the copper thin film may be manufactured in an electrolytic plating manner. The electrolytic plating process is advantageous in terms of flexibility and cost since it is easy to adjust the thickness and the like of a plating foil by adjusting the applied current size, current application time, temperature, and the like. In addition, when an electrolytic plating process is used, a thin copper thin film may be implemented, so that it is possible to improve the energy density of a battery.

For example, the method for manufacturing a copper thin film by an electrolytic plating method is as follows. First, a reaction tank equipped with a negative electrode rotating drum and a positive electrode plate disposed facing the negative electrode rotating drum is prepared, and the reaction tank is filled with a copper sulfate aqueous solution. Next, the negative electrode rotating drum is rotated while electricity is applied to the negative electrode rotating drum and the positive electrode plate to electro-deposit copper on the surface of the negative electrode rotating drum. Finally, the electro-deposited copper is continuously withdrawn from the reaction tank to finally prepare the copper thin film.

### (2) Roll-pressing copper thin film to form copper current collector

Next, the copper thin film is roll-pressed to form a copper current collector.

A method for roll-pressing a copper thin film is not particularly limited. For example, as a method for roll-pressing the copper thin film, a method for pressurizing a copper thin film by allowing the same to pass through between a pair of rollers, a cold roll-pressing method, and the like may be used but the method for roll-pressing the copper thin film is not limited thereto.

At least a portion of the surface of the copper thin film may be plastically deformed by the roll-pressing. As a result, on the surface of the copper thin film, a portion in which compressive residual stress is formed and a portion in which tensile residual stress is formed may be formed.

The magnitude of pressure applied to the copper thin film during the roll-pressing may be 60% to 83%, specifically 70% to 83%, and more specifically 70% to 80% of the tensile strength of the copper thin film before the roll-pressing. If the magnitude of the pressure satisfies the above-described numerical ranges, the stress intensity factor of the current collector may be remarkably lowered by increasing the area in which compressive residual stress is formed on the surface portion of the copper thin film without disconnection or breakage of the copper thin film.

The magnitude of the pressure applied to the copper thin film during the roll-pressing may be 210 MPa to 290 MPa, specifically from 230 MPa to 290 MPa, and more specifically from 250 MPa to 280 MPa. If the roll-pressing pressure of the copper thin film satisfies the above-described numerical ranges, the area in which compressive residual stress is formed on the surface of the copper thin film may be increased without disconnection of the copper thin film.

The tensile strength of the copper thin film before the roll-pressing may be 300 MPa to 500 MPa, specifically from 350 MPa to 500 MPa, and more specifically from 350 MPa to 450 MPa. At this time, the tensile strength of a copper thin film means the stress when the copper thin film breaks before the copper thin film is roll-pressed. For example, the tensile strength of a copper thin film means the maximum value of the tensile strength measured when the copper thin film breaks after cutting the copper thin film to a width of 12.7 mm, and then fastening both ends of the copper thin film respectively to upper and lower jigs of a measuring device (UTM, Zwick Co.), followed by pulling the ends in a vertical direction at a rate of 50 mm/min. If the tensile strength of the copper thin film satisfies the above-described numerical ranges, the copper current collector has excellent mechanical properties with respect to an external force, and has excellent durability, and a problem in which cracks are generated due to excessive stress applied to the copper current collector during cell charging and discharging may be prevented.

### <Lithium secondary battery>

A lithium secondary battery of the present invention may include a negative electrode, a positive electrode, a separator, and an electrolyte. The negative electrode includes a negative electrode current collector, and the negative electrode current collector may be the copper current collector of the present invention described above.

According to an embodiment of the present invention, the negative electrode may include a negative electrode current collector, and a negative electrode active material layer formed on the negative electrode current collector. According to another embodiment of the present invention, the negative electrode may not form a negative electrode active material layer on the negative electrode current collector. Specifically, the negative electrode may be a copper current collector itself, which is manufactured according to the present invention, or in a form in which a specific metal is physically bonded, roll-pressed, or deposited on the copper current collector. The depositing method may be subjecting the specific metal to electrical vapor deposition or chemical vapor deposition. In this case, the specific metal bonded/roll-pressed/deposited on the copper electrode current collector may be one type of metal selected from the group consisting of lithium (Li), nickel (Ni), tin (Sn), and indium (In), an alloy of two types of metals thereof, or the like.

The negative electrode active material layer may include a negative electrode active material, and may further include, if necessary, a conductive material, a binder, and the like.

The negative electrode active material may include at least one selected from the group consisting of a lithium metal, a carbon material capable of reversibly intercalate/deintercalate lithium ions, a metal or an alloy of the metal and lithium, a metal composite oxide, a material capable of doping and undoping lithium, and a transition metal oxide.

As the carbon material capable of reversibly intercalate/de-intercalate lithium ions, a carbon-based negative electrode active material commonly used in a lithium ion secondary battery may be used without particular limitation, and representative examples thereof may include a crystalline carbon, an amorphous carbon, or a combination thereof. Examples of the crystalline carbon may include graphite such as an irregular, planar, flaky, spherical, or fibrous natural graphite or artificial graphite, and examples of the amorphous carbon may include soft carbon (low-temperature fired carbon) or hard carbon, mesophase pitch carbides, fired cokes, and the like.

As the metal or the alloy of the metal and lithium, a metal selected from the group consisting of Cu, Ni, Na, K, Rb, Cs, Fr, Be, Mg, Ca, Sr, Si, Sb, Pb, In, Zn, Ba, Ra, Ge, Al, and Sn, or an alloy of the metal and lithium may be used.

As the metal composite oxide, one selected from the group consisting of PbO, PbO₂, Pb₂O₃, Pb₃O₄, Sb₂O₃, Sb₂O₄, Sb₂O₅, GeO, GeO₂, Bi₂O₃, Bi₂O₄, Bi₂O₅, LiₓFe₂O₃ (0≤x≤1) , LiₓWO₂ (0≤x≤1) , and SnₓMe₁₋ₓMe'_{y}O_{z} (Me: Mn, Fe, Pb, Ge; Me': Al, B, P, Si, elements in Group 1, Group 2, and Group 3 of the periodic table, halogen; 0<x≤1; 1≤y≤3; 1≤z≤8) may be used.

The material capable of doping and undoping lithium may be Si, SiOₓ(0<x≤2), an Si-Y alloy (wherein Y is an element selected from the group consisting of an alkali metal, an alkaline earth metal, a Group 13 element, a Group 14 element, a transition metal, a rare earth element, and a combination thereof, but not Si), Sn, SnO₂, Sn-Y (wherein Y is an element selected from the group consisting of an alkali metal, an alkaline earth metal, a Group 13 element, a Group 14 element, a transition metal, a rare earth element, and a combination thereof, but not Sn), and the like, or at least one thereof may be mixed with SiO₂ and used. The element Y may be selected from the group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ge, P, As, Sb, Bi, S, Se, Te, Po, and a combination thereof.

The transition metal oxide may be a lithium-containing titanium composite oxide (LTO), a vanadium oxide, a lithium vanadium oxide, and the like.

The negative electrode active material may be included in an amount of 60 wt% to 99 wt%, preferably 70 wt% to 99 wt%, and more preferably 80 wt% to 98 wt%, based on the total weight of the negative electrode active material layer.

A negative electrode conductive material is a component for further improving the conductivity of a negative electrode active material, and the conductive material is not particularly limited as long as it has conductivity without causing a chemical change in the battery, and for example, carbon powder such as carbon black, acetylene black, Ketjen black, channel black, furnace black, lamp black, or thermal black; graphite powder such as natural graphite, artificial graphite, or graphite with a highly developed crystal structure; conductive fiber such as carbon fiber or metal fiber; fluorocarbon powder; conductive powder such as aluminum powder or nickel powder; conductive whisker such as zinc oxide or potassium titanate; conductive metal oxide such as titanium oxide; a conductive material such as polyphenylene derivative, or the like may be used.

The negative electrode conductive material may be included in an amount of 1 wt% to 20 wt%, preferably 1 wt% to 15 wt%, and more preferably 1 wt% to 10 wt%, based on the total weight of the negative electrode active material layer.

A negative electrode binder is a component that assists in coupling between a negative electrode conductive material, a negative electrode active material, and a negative electrode current collector. Examples of the binder may include polyvinylidene fluoride (PVDF), polyvinyl alcohol, carboxymethyl cellulose (CMC), starch, hydroxypropyl cellulose, regenerated cellulose, polyvinylpyrrolidone, polyethylene, polypropylene, an ethylene-propylene-diene monomer, a sulfonated ethylene-propylene-diene monomer, styrene-butadiene rubber, fluorine rubber, various copolymers thereof, and the like.

Typically, the negative electrode binder may be included in an amount of 1 wt% to 20 wt%, preferably 1 wt% to 15 wt%, and more preferably 1 wt% to 10 wt%, based on the total weight of the negative electrode active material layer.

Meanwhile, a positive electrode may include a positive electrode current collector, and a positive electrode active material layer formed on the positive electrode current collector.

The positive electrode current collector is not particularly limited as long as it has conductivity without causing a chemical change in the battery. For example, as the current collector, stainless steel, aluminum, nickel, titanium, fired carbon, or aluminum or stainless steel that is surface-treated with one of carbon, nickel, titanium, silver, and the like may be used.

The positive electrode current collector may have a thickness of 3 µm to 500 µm, and microscopic irregularities may be formed on the surface of the positive electrode current collector to improve adhesion with respect to the positive electrode active material layer. For example, the positive electrode current collector may be used in various forms such as a film, a sheet, a foil, a net, a porous body, a foam, and a non-woven body.

The positive electrode active material layer may include a positive electrode active material, and may further include, if necessary, a conductive material, a binder, and the like.

The positive electrode active material is a compound capable of reversible intercalation and de-intercalation of lithium, and specifically, may include a lithium metal oxide including one or more metals, such as cobalt, manganese, nickel, and aluminum, and lithium. More specifically, the lithium metal oxide may be a lithium-manganese-based oxide (e.g., LiMnO₂, LiMn₂O₄, etc.), a lithium-cobalt-based oxide (e.g., LiCoO₂, etc.), a lithium-nickel-based oxide (e.g., LiNiO₂, etc.), a lithium-nickel-manganese-based oxide (e.g., LiNi_{1-Y}Mn_{Y}O₂ (wherein 0<Y<1), LiMn_{2-Z}Ni_{Z}O₄ (wherein 0 < Z < 2), etc.), a lithium-nickel-cobalt-based oxide (e.g., LiNi_{1-Y1}Co_{Y1}O₂ (wherein 0<Y1<1), etc.), a lithium-manganese-cobalt-based oxide (e.g., LiCo_{1-Y2}Mn_{Y2}O₂ (wherein 0<Y2<1), LiMn_{2-Z1}Co_{Z1}O₄ (wherein 0 < Z1 < 2) , etc.), a lithium-nickel-manganese-cobalt-based oxide (e.g., Li(NiₚCo_{q}Mnᵣ)O₂ (wherein 0<p<1, 0<q<1, 0<r<1, and p+q+r=1) or Li(Niₚ₁Co_{q1}Mnᵣ₁)O₄ (wherein 0 < p1 < 2, 0 < q1 < 2, 0 < r1 < 2, and p1+q1+r1=2), etc.), or a lithium-nickel-cobalt-transition metal (M) oxide (e.g., Li(Niₚ₂Co_{q2}Mnᵣ₂Mₛ₂)O₂ (wherein M is selected from the group consisting of Al, Fe, V, Cr, Ti, Ta, Mg, and Mo, and p2, q2, r2, and s2 are each an atomic fraction of stand-alone elements, wherein 0<p2<1, 0<q2<1, 0<r2<1, 0<s2<1, and p2+q2+r2+s2=1), etc.), lithium iron phosphate (e.g., Li₁₊ₐFe₁₋ₓMₓ (PO_{4-b}) X_{b} (wherein M is one or more selected from Al, Mg, and Ti, X is one or more selected from F, S, and N, and -0.5≤a≤0.5, 0≤x≤0.5, and 0≤b≤0.1), and the like, and any one thereof or a mixture of two or more thereof may be included.

Among these, from a viewpoint that the capacity properties and stability of a battery may be increased, the lithium metal oxide may be LiCoO₂, LiMnO₂, LiNiO₂, a lithium nickel-manganese-cobalt oxide (e.g., Li(Ni_{1/3}Mn_{1/3}Co_{1/3})O₂, Li(Ni_{0.6}Mn_{0.2}Co_{0.2})O₂, Li(Ni_{0.5}Mn_{0.3}Co_{0.2})O₂, Li(Ni_{0.7}Mn_{0.15}Co_{0.15})O₂, Li(Ni_{0.8}Mn_{0.1}Co_{0.1})O₂, etc.), a lithium nickel cobalt aluminum oxide (e.g., Li(Ni_{0.8}Co_{0.15}Al_{0.05})O₂, etc.), a lithium nickel manganese cobalt aluminum oxide (e.g., Li(Ni_{0.86}Co_{0.05}Mn_{0.07}Al_{0.02})O₂), a lithium iron phosphate (e.g., LiFePO₄) or the like, and any one thereof or a mixture of two or more thereof may be used.

The positive electrode active material may be included in an amount of 60 wt% to 99 wt%, preferably 70 wt% to 99 wt%, and more preferably 80 wt% to 98 wt%, based on the total weight of the positive electrode active material layer.

A positive electrode conductive material is a component for further improving the conductivity of a positive electrode active material, and the conductive material is not particularly limited as long as it has conductivity without causing a chemical change in the battery, and for example, carbon powder such as carbon black, acetylene black, Ketjen black, channel black, furnace black, lamp black, or thermal black; graphite powder such as natural graphite, artificial graphite, or graphite with a highly developed crystal structure, conductive fiber such as carbon fiber or metal fiber; fluorocarbon powder; conductive powder such as aluminum powder or nickel powder; conductive whisker such as zinc oxide or potassium titanate; conductive metal oxide such as titanium oxide; a conductive material such as polyphenylene derivative, or the like may be used.

Typically, the positive electrode conductive material may be included in an amount of 1 wt% to 20 wt%, preferably 1 wt% to 15 wt%, and more preferably 1 wt% to 10 wt%, based on the total weight of the positive electrode active material layer.

A positive electrode binder is a component that assists in coupling between an active material, a conductive material, etc., and coupling to a current collector.

Examples of the binder may include polyvinylidene fluoride, polyvinyl alcohol, carboxymethyl cellulose (CMC), starch, hydroxypropyl cellulose, regenerated cellulose, polyvinylpyrrolidone, polyethylene (PE), polypropylene, an ethylene-propylene-diene monomer, a sulfonated ethylene-propylene-diene monomer, styrene-butadiene rubber, fluorine rubber, various copolymers thereof, and the like.

Typically, the positive electrode binder may be included in an amount of 1 wt% to 20 wt%, preferably 1 wt% to 15 wt%, and more preferably 1 wt% to 10 wt%, based on the total weight of the positive electrode active material layer.

Meanwhile, the separator may be disposed between the positive electrode and the negative electrode. The separator may be used without particular limitation as long as it is commonly used as a separator in a lithium secondary battery, and particularly, a separator having excellent moisture-retention capability for an electrolyte solution while having low resistance to ion movement in an electrolyte is preferable.

For example, as the separator, a porous polymer film including a polyolefin-based polymer such as an ethylene homopolymer, a propylene homopolymer, an ethylene/butene copolymer, an ethylene/hexene copolymer, an ethylene/methacrylate copolymer, or the like, or a stacked structure having two or more layers thereof may be used. In addition, a typical porous non-woven fabric, for example, a non-woven fabric made of glass fiber having a high melting point, polyethylene terephthalate fiber, or the like may be used as the separator.

The lithium secondary battery according to an embodiment of the present invention may include an electrolyte. In this case, the electrolyte may be a non-aqueous electrolyte. The non-aqueous electrolyte may include an organic solvent and a lithium salt commonly used in the art, but is not particularly limited.

Any organic solvent may be used as the organic solvent without particular limitation as long as it may serve as a medium through which ions involved in an electrochemical reaction of the battery may move. Specifically, as the organic solvent, an ester-based solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC), and the like may be used.

Among these, the carbonate-based solvent is preferred, and a mixture of a cyclic carbonate (e.g., ethylene carbonate or propylene carbonate) having high ion conductivity and a high dielectric constant, which may increase charge/discharge performance of the battery, and a low-viscosity linear carbonate-based compound (e.g., ethylmethyl carbonate, dimethyl carbonate, diethyl carbonate, or the like) is more preferred.

Any compound may be used as the lithium salt without particular limitation as long as it is a compound capable of providing lithium ions used in a lithium secondary battery. Specifically, as the lithium salt, LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, LiB(C₂O₄)₂, or the like may be used. It is preferable that the lithium salt is included in the electrolyte in a concentration of about 0.6 mol% to about 2 mol%.

Meanwhile, the non-aqueous electrolyte according to the present invention may additionally include, although not required, additives in order to further improve the physical properties of the secondary battery.

Examples of such an additive may include at least one selected from the group consisting of a cyclic carbonate-based compound, a halogen-substituted carbonate-based compound, a nitrile-based compound, a sultone-based compound, a sulfate-based compound, a phosphate-based compounds, a borate-based compound, a benzene-based compound, an amine-based compound, a silane-based compound, and a lithium salt-based compound.

The cyclic carbonate-based compound may be, for example, vinylene carbonate (VC), vinylethylene carbonate (VEC), or the like.

The halogen-substituted carbonate-based compound may be, for example, fluoroethylene carbonate (FEC) and the like.

The nitrile-based compound may be, for example, succinonitrile, adiponitrile, hexanetricyanide, 1,4-dicyano-2-butene, and the like.

The sultone-based compound may be, for example, 1,3-propanesultone, 1,3-propenesultone, or the like.

The sulfate-based compound may be, for example, ethylene sulfate (ESA), trimethylene sulfate (TMS), methyl trimethylene sulfate (MTMS), or the like.

The phosphate-based compound may be, for example, one or more compounds selected from lithium difluoro(bisoxalato)phosphate, lithium difluorophosphate, tetramethyl trimethyl silyl phosphate, trimethyl silyl phosphite, tris(2,2,2-trifluoroethyl)phosphate, and tris(trifluoroethyl)phosphite.

The borate-based compound may be, for example, tetraphenylborate, lithium oxalyldifluoroborate (LiODFB), or the like.

The benzene-based compound may be, for example, fluorobenzene or the like, the amine-based compound may be triethanolamine, ethylenediamine, or the like, and the silane-based compound may be tetravinylsilane or the like.

The lithium salt-based compound is a compound different from the lithium salt included in the non-aqueous electrolyte solution, and may be one or more compounds selected from the group consisting of LiPO₂F₂, LiODFB, lithium bisoxalatoborate (LiB(C₂O₄)₂) (LiBOB), and LiBF₄.

Meanwhile, the additives may be used alone, or two or more thereof may be mixed and used.

The total amount of the additive may be 1 wt% to 20 wt%, preferably 1 wt% to 15 wt% based on the total weight of the electrolyte solution. When the additive is included in the above range, it is possible to stably form a film on the electrode, suppress an ignition phenomenon during overcharging, and prevent side reactions from occurring or the additive from remaining or being precipitated during an initial activation process of the secondary battery.

The lithium secondary battery of the present invention may be manufactured by placing an electrode assembly, which is formed by disposing a separator between a positive electrode and a negative electrode, into a battery case, injecting an electrolyte to the battery case, and then sealing the same. Alternatively, the lithium secondary battery may be manufactured by stacking the electrode assembly, and then placing a resultant product, which is obtained by impregnating the electrode assembly with an electrolyte, into a battery case, followed by sealing the battery case.

Any battery case commonly used in the art may be adopted as the battery case, and there is no limitation in the appearance thereof according to the use of a battery, and for example, the battery case may have a cylindrical shape, a square shape, a pouch shape, a coin shape, or the like, but is not limited thereto.

The lithium secondary battery according to an embodiment of the present invention may be used in a battery cell which is used as a power source for a small-sized device, and may also be preferably used as a unit cell in a medium-and-large-sized battery module including a plurality of battery cells. Preferable examples of the above medium-and large-sized device may include electric vehicles, hybrid electric vehicles, plug-in hybrid electric vehicles, energy storage system (ESS), and the like.

### MDOE FOR CARRYING OUT THE INVENTION

Hereinafter, the present invention will be described in more detail with reference to specific examples. However, the following examples are for illustrative purposes only to facilitate the understanding of the present invention, and do not limit the scope of the present invention. It will be apparent to those skilled in the art that various changes and modifications can be made without departing from the scope and spirit of the invention, and it is obvious that such variations and modifications are within the scope of the appended claims.

### Examples and Comparative Examples

### Example 1

### (1) Manufacturing of copper current collector

A reaction tank equipped with a negative electrode rotating drum and a positive electrode plate disposed facing the negative electrode rotating drum was prepared, and the reaction tank was filled with an electrolyte solution containing a mixture of copper sulfate and water. Next, the negative electrode rotating drum was rotated while electricity was applied to the negative electrode rotating drum and the positive electrode plate to electro-deposit copper on the surface of the negative electrode rotating drum. Thereafter, the electro-deposited copper was continuously withdrawn from the reaction tank to obtain a copper thin film having a thickness of 10 µm.

The obtained copper thin film was roll-pressed at a pressure of 250 MPa through a roll-press process. The roll-pressed copper thin film was subjected to slitting and sheeting to manufacture a copper current collector having a thickness of 8.5 µm.

### (2) Manufacturing of lithium secondary battery

Spherical artificial graphite, carbon black, carboxylmethyl cellulose (CMC), and styrene-butadiene rubber (SBR) were introduced to distilled water at a weight ratio of 97.35 : 0.5 : 1.15 : 1 and stirred to prepare a negative electrode slurry. The negative electrode slurry was applied on one surface of the manufactured copper current collector at a loading amount of 10.48 mg/cm² and then vacuum-dried. The dried negative electrode slurry was roll-pressed, and vacuum-dried in a vacuum oven at 100 °C for 8 hours to manufacture a negative electrode.

LiCoO₂, polyvinylidene fluoride (PVdF), carbon nanotube (CNT), and carbon black were introduced to N-methylpyrrolidone (NMP), which is a solvent, at a weight ratio of 97.59 : 1.18 : 0.24 : 0.09 and stirred to prepare a positive electrode slurry. The positive electrode slurry was applied to one surface of an aluminum thin film having a thickness of 10 µm at a loading amount of 18.60 mg/cm² and then vacuum-dried. The dried positive electrode slurry was roll-pressed, dried in a vacuum oven at 130 °C for 6 hours, and then punched to manufacture a positive electrode.

The positive electrode and the negative electrode manufactured as described above and a porous polyethylene separator (thickness: 12 µm) were assembled in a stacking manner to manufacture an electrode assembly.

LiPF₆ was dissolved to 1.2 M in a solvent (EC : PC : EP : PP = 20 : 10 : 25 : 45 mass ratio) to prepare an electrolyte.

The electrode assembly was received in a battery case, and the electrolyte was injected thereto, and the battery case was sealed to manufacture a lithium secondary battery.

### Example 2

A copper current collector (thickness: 8 µm) was manufactured in the same manner as in Example 1, except that the obtained copper thin film was roll-pressed at a pressure of 280 MPa through a roll-press process.

A lithium secondary battery was manufactured in the same manner as in Example 1, except that the copper current collector manufactured by the above-described method was used as a negative electrode current collector.

### Comparative Example 1

A copper current collector (thickness: 10 µm) was manufactured in the same manner as in Example 1, except that the obtained copper thin film was roll-pressed at a pressure of 200 MPa through a roll-press process.

A lithium secondary battery was manufactured in the same manner as in Example 1, except that the copper current collector manufactured by the above-described method was used as a negative electrode current collector.

### Comparative Example 2

A copper current collector was manufactured in the same manner as in Example 1, except that the obtained copper thin film was roll-pressed at a pressure of 300 MPa through a roll-press process.

A lithium secondary battery was manufactured in the same manner as in Example 1, except that the copper current collector manufactured by the above-described method was used as a negative electrode current collector.

### Experimental Example 1 - Measurement of tensile strength of copper thin film before roll-pressing

The tensile strength of the copper thin film before the roll-pressing in each of Examples 1 and 2 and Comparative Examples 1 and 2 was measured. Specifically, the tensile strength of the copper thin film before the roll-pressing was measured by fastening both ends of the copper thin film respectively to upper and lower jigs of a Universal Testing Machine (UTM, Zwick Co.), followed by pulling the ends in a vertical direction. The measurement results are shown in Table 1 below.

Subsequently, the ratio of the pressure magnitude applied to the copper thin film to the tensile strength was calculated and shown in Table 1 below.

**[Table 1]**

| | Copper thin film tensile strength before roll-pressing (MPa) | Roll-pressing pressure (MPa) | (Roll-pressing pressure/tensi le strength) × 100 (%) |
|---|---|---|---|
| Example 1 | 350 | 250 | 71 |
| Example 2 | 350 | 280 | 80 |
| Comparative Example 1 | 350 | 200 | 57 |
| Comparative Example 2 | 350 | 300 | 85 |

### Experimental Example 2 - Measurement of residual stress on copper current collector surface

The residual stress of the surface of the copper current collector manufactured in each of Examples 1 to 2 and Comparative Example 1 was measured. Specifically, the residual stress on the surface of the copper current collector was measured by X-ray diffraction using the µ-X360 equipment of PULSTEC Co. The measurement results are shown in Table 2 below and FIGS. 1 to 3.

FIG. 1 is an image of the surface residual stress distribution of a copper current collector of Example 1 measured by X-ray diffraction.

FIG. 2 is an image of the surface residual stress distribution of a copper current collector of Example 2 measured by X-ray diffraction.

FIG. 3 is an image of the surface residual stress distribution of a copper current collector of Comparative Example 1 measured by X-ray diffraction.

As illustrated in FIGS. 1 to 3, the copper current collector may include a portion in which compressive residual stress is formed (illustrated in blue) and a portion in which tensile residual stress is formed (illustrated in red).

**[Table 2]**

| | Residual stress ratio (%) | | Maximum compressive residual stress (MPa) |
|---|---|---|---|
| | Tensile residual stress | Compressiv e residual stress | |
| Example 1 | 45 | 55 | -60 |
| Example 2 | 17 | 83 | -178 |
| Comparative Example 1 | 87 | 13 | -11 |
| Comparative Example 2 | Not measurable due to disconnection break | | |

### Experimental Example 3 - Evaluation of lifespan properties of lithium secondary battery

The lithium secondary battery manufactured in each of Examples 1 and 2 and Comparative Example 1 was charged/discharged according to the following conditions at a temperature of 45°C, and the capacity retention rate thereof according to the number of cycles was measured.

- Charging condition: Charge at a rate of 0.33 C in CC (Constant Current)/CV (Constant Voltage) mode, and cut-off at 4.2 V and 0.05 C

- Discharging condition: Discharge at a rate of 0.33 C in CC mode, and cut-off at 3.0 V

In this case, the capacity retention rate of the battery was measured using IL-2C-525S of JEIO TECH Co. The measurement results are shown in Table 3 below.

**[Table 3]**

| | Capacity retention rate of lithium secondary battery (%) |
|---|---|
| Example 1 | 96 |
| Example 2 | 96 |
| Comparative Example 1 | 89 |
| Comparative Example 2 | Not measurable |

As shown in Tables 1 to 3, it can be confirmed that in the case of Examples 1 and 2 having the area in which compressive residual stress is formed of 30% or more of the total measured area, the capacity retention rate of the battery is higher than that of Comparative Example 1, in which the ratio of the area in which compressive residual stress is formed is out of the above-described numerical range. From this, it can be inferred that when a secondary battery manufactured using the copper current collector of each of Examples 1 and 2 is driven, there are no cracks on the surface of the copper current collector.

Meanwhile, in the case of Comparative Example 2, the copper current collector was disconnected and broke, so that it was not possible to measure the residual stress on the surface of the copper current collector and the capacity retention rate of the lithium secondary battery.

## Claims

1. A copper current collector having an area in which compressive residual stress is formed of 30% or more of a total measured area when measuring surface residual stress.

2. The copper current collector of claim 1, wherein the area in which the compressive residual stress is formed is 30% to 100% of the total measured area.

3. The copper current collector of claim 1, wherein a maximum compressive residual stress is -20 MPa or less.

4. The copper current collector of claim 1, wherein a maximum compressive residual stress is -200 MPa to -20 MPa.

5. The copper current collector of claim 1, wherein a thickness thereof is 4 µm to 20 µm.

6. A method for manufacturing a copper current collector, the method comprising:
manufacturing a copper thin film by an electrolytic plating process; and
roll-pressing the copper thin film to form a copper current collector, wherein the copper current collector has an area in which compressive residual stress is formed of 30% or more of a measured area when measuring residual stress.

7. The method of claim 6, wherein at least a portion of the surface of the copper current collector is plastically deformed by the roll-pressing.

8. The method of claim 6, wherein a magnitude of a pressure applied to the copper thin film during the roll-pressing is 60% to 83% of a tensile strength of the copper thin film before the roll-pressing.

9. The method of claim 6, wherein a magnitude of a pressure applied to the copper thin film during roll-pressing is 210 MPa to 290 MPa.

10. The method of claim 6, wherein a tensile strength of the copper thin film before the roll-pressing is 350 MPa to 500 MPa.

11. A negative electrode comprising the copper current collector according to claim 1.

12. A lithium secondary battery comprising:
a negative electrode including the copper current collector according to claim 1;
a positive electrode; and
a separator disposed between the negative electrode and the positive electrode.
